Europäisches Patentamt

European Patent Office

Office européen des brevets

(19)

(11) Veröffentlichungsnummer: **0 118 818**
**B1**

(12) **EUROPÄISCHE PATENTSCHRIFT**

(45) Veröffentlichungstag der Patentschrift:
**13.05.87**

(51) Int. Cl.⁴: **G 01 P 1/12**

(21) Anmeldenummer: **84101972.2**

(22) Anmeldetag: **24.02.84**

(54) **Unfalldatenschreiber.**

(30) Priorität: **26.02.83 DE 3306814**
**17.02.84 DE 3405757**

(43) Veröffentlichungstag der Anmeldung:
**19.09.84 Patentblatt 84/38**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**DE - A - 2 322 299**
**FR - A - 2 424 537**
**FR - A - 2 511 509**
**US - A - 2 917 300**
**US - A - 3 226 981**
**US - A - 4 250 487**

(73) Patentinhaber: **Licentia Patent-Verwaltungs-GmbH,**
**Theodor-Stern-Kai 1, D-6000 Frankfurt/Main 70 (DE)**

(72) Erfinder: **Zottnik, Edmund, Hermann-Lönsstrasse 20,**
**D-7016 Gerlingen 2 (DE)**

ACTORUM AG

**Beschreibung**

Die Erfindung geht aus von einem Verfahren zur Aufnahme und Speicherung unfallbezogener Daten und Ereignissen bei Kraftfahrzeugen, wie es im Oberbegriff des Anspruches 1 näher definiert ist.

Ein derartiges Verfahren ist z.B. aus der DE-A-23 22 299 für eine Einrichtung zur Registrierung von Betriebsdaten für Fahrzeuge bekannt. Bei dieser in heutiger Ausdrucksweise als Unfalldatenschreiber zu bezeichnenden bekannten Einrichtung wird u.a. über die Radumdrehungen die Fahrzeuggeschwindigkeit ermittelt und es werden über nicht näher bezeichnete Beschleunigungsmesser auch die Längs- und Querbeschleunigungen in verschiedener Stufung analog erfasst. Daneben können auch noch andere Grössen und Zustände überwacht und registriert werden. Die Daten, hier insbesondere die Beschleunigungsdaten, werden nach multiplexer Abtastung und einer Analog-/Digitalwandlung mittels eines zentralen Taktes von einem Steuersignalgeber auf verschiedene Schieberegister gegeben, wo sie zwischengespeichert werden bzw. nach Auftreten eines Unfalls unter Verwendung eines Festspeichers unlöschbar gespeichert werden. Nach Durchlauf der Schieberegister gehen die ältesten gespeicherten Daten jeweils verloren. Bei einem Aufprall (Unfall) werden die gerade im Schiebespeicher befindlichen Daten festgehalten, d.h. nicht mehr gelöscht, sondern in einem Festspeicher zusammen mit einer gewünschten Anzahl von Nachunfalldaten gespeichert. Es ist einleuchtend, dass durch eine ausreichend grosse Anzahl von Schieberegisterstufen dafür gesorgt werden muss, dass bei einem Aufprallsignal und Stehenbleiben der Schieberegister auch ausreichend viele auswertbare digitale Daten aus der Zeit vor dem Aufprall in den Schieberegistern enthalten sind. Dies bedingt für ungünstige Unfallsituationen (hohe Geschwindigkeiten) einen hohen Speicherumfang. Problematisch ist bei diesem angewandten Verfahren auch, dass die Übernahme der Inhalte der Schieberegister in den Festspeicher blockweise und zeitversetzt erfolgt. Nach-Unfalldaten, die gerade in ihre vorgesehenen Schieberegister zwischengespeichert werden sollen, werden unterbunden, weil der Steuersignalgeber das Einspeichern weiterer Daten für die Schieberegister verhindert, die gerade nicht mit dem Festspeicher verbunden sind. D.h., diese Daten können auch später nicht mehr in den Festspeicher übernommen werden und sind für eine Auswertung verloren. Andererseits spielt sich das Unfallgeschehen in der Realzeit ab und muss aufgezeichnet werden, sobald die Daten eingehen.

Durch die Stückelung der Daten durch den Eingangs-Analogmultiplexer ergibt sich auch ein Zeitversatz, so dass, auch wenn eine Integration erfolgen sollte, nur über jeweils ein Viertel der verfügbaren Taktzeit integriert werden kann, was – um beim angegebenen Beispiel mit einem Multiplexer mit vier Dateneingängen zu bleiben – einen Datenverlust von 75% bedeutet.

Obwohl nicht im einzelnen angegeben, kann bei dem bekannten Verfahren die Erfassung eines Triggerereignisses (Aufprallsignal) durch den Beschleunigungsdetektor nur als Überschreiten von fest vorgegebenen Werten für die Längs- oder die Querbeschleunigung definiert werden. Dies führt dazu, dass wegen der unterlassenen, differenzierten Wertung der Beschleunigungsdaten, beispielsweise eine Berechnung resultierender Werte aus Längs- und Querbeschleunigung nicht erfolgt und die häufigsten Unfälle praktisch nicht zur Auslösung führen. Beispielsweise dann nicht, wenn unter Nichtbeachtung der Vorfahrt Aufprallunfälle nur minimale Querbeschleunigungen, keine Längsbeschleunigung, jedoch signifikante Winkelbeschleunigungen bewirken, insbesondere wenn der Reibungsbeiwert Rad/Strasse herabgesetzt ist. Da aber eine Unterbrechung des Taktsignals nur bei Auftreten eines Aufprallsignals erfolgt, dürften in einer Vielzahl von Fällen, insbesondere bei Personenunfällen, die signifikanten Daten verloren gehen. Weitere Nachteile des der bekannten Einrichtung zugrundeliegenden Verfahrens sind beispielsweise folgende. Durch die blosse Aufzeichnung von Längsbeschleunigung und Querbeschleunigung können Bewegungen eines Fahrzeugs in einer Ebene nicht festgelegt werden. Bei einem Schleudervorgang dreht sich ein Fahrzeug um seine Hochachse, und aus der Längsbeschleunigung wird eine Querbeschleunigung. Nur wenn man die Winkelbeschleunigung um die Hochachse in eine Berechnung einbezieht, lässt sich durch eine rechnerische Rekonstruktion ein falsches Ergebnis der ermittelten Ortskurve vermeiden.

Da für die Auswertung Momentanwerte im Abstand der gewählten Taktrate lediglich zur Verfügung stehen, können diese bei grossen differentiellen Änderungen der Beschleunigungen (Bremsvorgang-Aufprall) nichts über die zur Berechnung erforderliche mittlere Beschleunigung aussagen. Es muss vielmehr davon ausgegangen werden, dass die gespeicherten Werte mit den wirklichen in lediglich zufälliger Weise verknüpft sind.

Problematisch ist ferner, dass zeitkritische Überlegungen, etwa eine Korrelierung mit der Absolutzeit nicht vorgenommen werden, daher sind beispielsweise im Falle einer Fahrerflucht zeitliche Zusammenhänge nicht nachzuweisen. Ferner sind Speicherung von Störungen im System nicht vorgesehen, Manipulationen an der Stromversorgung, Ausfall von Sensoren oder Signalleitungen können nicht erfasst werden; ein sicherer Schutz gegen Sabotage ist nicht möglich. Das gleiche trifft auf komplexe Funktionen wie beispielsweise Eigentest, Selbsteichung, u.dgl. zu.

Die für die meisten sonst bekannten Unfalldatenschreiber auf dem Kfz-Sektor weiter vorgesehenen Betriebsverfahren sind meist einfacherer, hier kaum relevanter Art. So kann bei Kurzwegschreibern (Fabrikat Kienzle) oder Farbscheiben-Tachographen (Firma Hardler AG) lediglich die Geschwindigkeit vor dem Unfall ohne jede zusätzlichen Daten aufgezeichnet werden. Es handelt sich um graphisch/mechanische Aufzeichnungen mit Antrieb über eine biegsame Welle vom Getriebe her. Insbesondere bei blockierten Rädern sind keinerlei Daten mehr zu gewinnen, also im Grunde dann, wenn eine besonders sorgfältige Datenaufzeichnung notwendig ist. Andere Tachographen benutzen elektromechanische Datenspeicherung, bei der Kunststoffolien in Kreisform benutzt und eine Vielzahl von Daten durch jeweils übereinander angeordnete Scheiben aufgezeichnet werden. Auch hier stehen bei blockierten Rädern keine aufzuzeichnenden Werte mehr zur Verfügung.

Bekannt ist auch die Speicherung der Daten bei Kurzzeitschreibern auf elektromagnetischer oder rein elektrischer Grundlage, indem mittels eines vorzugsweise mehrspurigen Endlos-Magnetbandes entweder mit wegabhängigem oder mit kontinuierlichem Bandantrieb konstante Impulse oder drehzahlabhängige Signale gespeichert werden. Auch kann man elektronisch die Impulse eines von einem Rad angetriebenen Gebers mit einem Zähler auswerten und die Impulszeiten speichern.

Bei allen Verfahren, die mit Einrichtungen arbeiten, die irgendwie eine mechanische Bewegung durchführen müssen, kann ein einwandfreier Dauerbetrieb nicht sichergestellt werden.

Bekannt ist noch die Verwendung von kapazitiven, die Frequenz verwertenden Beschleunigungsgebern für das Anwendungsgebiet bei Fahrzeugen, wobei zur Erfassung von Beschleunigungsdaten Beschleunigungssensoren auf kapazitiver Grundlage mit beweglicher Mittelzunge Verwendung finden, die in einer Rückkopplungsanordnung innerhalb einer Schaltverstärkerschaltung vorgesehen werden. Von der Beschleunigung abhängig kann die Frequenz elektrisch ausgewertet werden. Wie, ist jedoch nicht näher ersichtlich (US-A-3 226 981).

Aufgabe der Erfindung ist es, ein Verfahren gemäss der eingangs genannten Art weiter zu verbessern, wobei die Erkenntnis zugrunde liegt, dass die zeitliche Auflösung eines komplexen Auffahrunfalls zur differenzierten Schuldzuweisung unerlässlich ist, und zwar einschliesslich sich ergebender Beschleunigungseinwirkungen. Eine Forderung, die mit einer wegabhängigen Aufzeichnung allein nicht gelöst werden kann, weil in diesem Fall die Aufzeichnungspausen, die beispielsweise dadurch entstehen können, dass die Räder blockieren, bedeutsamer als die Aufzeichnungen selbst sind. Von wesentlicher Bedeutung ist ferner, dass eine Realzeit-Aufzeichnung erfolgen muss, die sowohl eine direkte Verfügbarkeit der aufgezeichneten Daten untereinander und in ihrem Zeitbezug sicherstellt als auch bei näheren Aufzeichnungen das einzig verbleibende schlüssige Indiz für eine evtl. Tatbeteiligung bildet.

Die dargelegte Aufgabe wird gemäss den kennzeichnenden Merkmalen des Anspruches 1 gelöst. Vorteilhafte Ausgestaltungen sind den hierzu abhängigen Patentansprüchen entnehmbar.

Das erfindungsgemässe Verfahren hat den Vorteil, dass der gesamte Bewegungsablauf des Fahrzeugs für einen hinreichend langen Zeitraum vor Eintritt des Unfallereignisses präzise aufgezeichnet wird und im Moment des Unfalls unlöschbar gespeichert bleibt. Dabei wird nicht nur auf die durch die Messung von Radumdrehungen bestimmbare Fahrzeuggeschwindigkeit abgestellt, sondern es werden hochpräzise Beschleunigungsangaben ermittelt und gespeichert sowie gleichzeitig als Berechnungsgrundlage für die Ermittlung eines Unfallzeitpunktes ausgewertet.

Sämtliche gespeicherten Informationen und Daten sind auf eine Zeitbasis bezogen, die als eine von Strassen und Fahrbetrieb unabhängige Führungsgrösse eingesetzt ist. Dabei liefert die Zeitbasis sowohl einen Zähltakt für einen Zeitzähler als auch die Taktfrequenz des Gesamtsystems für die Datenerfassung und Speicherung.

Der erfindungsgemässe Unfalldatenschreiber ist so ausgelegt, dass das gesamte Geschehen beginnend mit einem hinreichend grossen Abstand vor einem jeweiligen Unfallzeitpunkt bis zu einem hinreichenden Zeitpunkt nach einem Unfall in allen seinen Einzelheiten hochgenau und in so enger Quantisierung aufgezeichnet wird, dass sich eine lückenlose Darstellung sämtlicher Ereignisse vor und nach dem Unfall vornehmen und entsprechend auswerten lässt.

Selbstverständlich ist die Entscheidung, ob normalerweise im stetigen Umlauf ständig wieder überschriebene Daten konserviert werden sollen, von irgendwelchen Entscheidungen des Fahrers selbst unabhängig; der Unfalldatenschreiber stellt aufgrund der ihm von externen Sensoren zugeführten Bedingungen die Möglichkeit, dass ein Unfall aufgetreten ist, fest und friert die zu diesem Unfall gehörenden Daten ein; gleichzeitig wird, nach Ablaufen einer ergänzenden Nachlaufzeit eine neue Sekundärschleife für die Speicherplatzbelegung in einem Festspeicher definiert und so eine Bereitschaftszeit zur Verfügung gestellt, um die kritische Zeit nach Auffahrunfällen mit zu überwachen.

Vorteilhaft ist ferner, dass eine bestimmte Abfolge von sogenannten wichtigen Statusbedingungen A in engen zeitlichen Abständen, beispielsweise jeweils alle 100 ms überwacht und gespeichert werden, während bei nicht so wichtigen äusseren Statusbedingungen B – zur Einsparung von Speicherplätzen – in grösseren zeitlichen Abständen, beispielsweise alle 500 ms eine Registrierung ihres Betriebszustandes erfolgen kann.

Zur Durchführung des erfindungsgemässen Verfahrens wird des weiteren ein Unfalldatenschreiber vorgeschlagen, wie er im Oberbegriff des Anspruches 8 näher definiert ist. Entsprechend den kennzeichnenden Merkmalen des Anspruches 8 ist für diesen Unfalldatenschreiber der Festspeicher zur umlaufenden Speicherung der erfassten Daten zunächst in einer ersten Speicherschleife mit einer vorgegebenen Anzahl von Speicherplätzen versehen. Zur Erfassung der Beschleunigungsdaten sind Schwingschaltungen mit Beschleunigungssensoren auf kapazitiver Grundlage vorgesehen, wobei die von diesen abgegebenen Frequenzen unmittelbar der digitalen Zählung und nachfolgenden Speicherung im Festspeicher zuführbar sind und dass Mittel vorgesehen sind, die unter Auswertung von erfassten bzw. berechneten Beschleunigungsdaten und ggf. weiterer Fahrzeugdaten den Zeitpunkt eines unfallbezogenen Triggerereignisses derart vorgeben, dass unter Erhöhung der Startadresse für die Datenspeicherung um den kompletten Versatz der (primären) ggf. reduzierten Speicherschleife eine (sekundäre) Speicherschleife definiert wird zur nachfolgenden Datenspeicherung.

Weitere zweckmässige Ausgestaltungen des Unfalldatenschreibers sind den abhängigen Patentansprüchen 9 bis 14 entnehmbar.

Im Zusammenhang mit der weiteren Ausgestaltung des Unfalldatenschreibers speziell des Beschleunigungssensors ist noch die FR-A-25 11 509 erwähnenswert. Sie beschreibt einen Dreiachsenbeschleunigungsmesser, bei dem eine spezielle Prüfmasse in Kreuzform Verwendung findet, die zwischen Elektroden elektrostatisch aufgehängt ist und einen kapazitiven Spannungsteiler mit äusseren Elektroden bildet. Auslenkungen der Prüfmasse werden über Veränderungen in der kapazitiven Spannungsteilung ausgewertet. Diese Anordnung ist mit einer Messbandbreite von 10 g bis 1 µg speziell für Trägheitsnavigation gedacht und nicht für Kfz-Technik brauchbar. Sie hat auch im übrigen nichts mit der Erfindung zu tun, abgesehen von der rein figürlichen Ähnlichkeit der dortigen Prüfmasse mit einem Ausführungsbeispiel eines erfindungsgemäss verwendeten Beschleunigungsaufnehmers.

Anhand von Ausführungsbeispielen wird die Erfindung im nachstehenden näher erläutert.

Es zeigen:

Fig. 1 einen erfindungsgemässen Unfalldatenschreiber in Blockbilddarstellung

Fig. 2 bis 5 in schematischer Darstellung Angaben zum verwendeten Beschleunigungssensor.

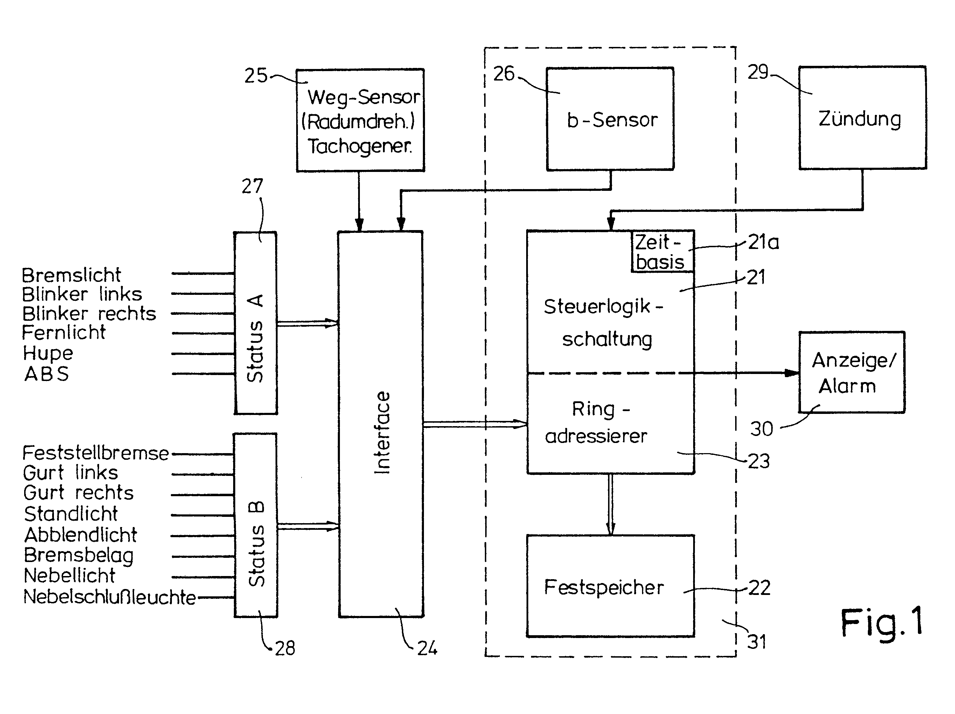

Es ist eine zentrale Steuerlogikschaltung 21 vorgesehen, die entsprechend der Darstellung der Fig. 1 die erforderlichen, aufzuzeichnenden Daten zugeführt erhält und die Speicherung der Daten in einem Festspeicher 22 veranlasst, wozu sie sich einer Adressierlogik 23 bedient, die auch als Ringadressierer, Ringspeicher oder zyklisch umlaufender Adressenzähler bezeichnet werden kann, der mit der von ihm jeweils in vorgegebenen Zeitabständen erstellten neuen Adresse immer einen anderen Speicherplatz oder eine andere Speicherstelle im Festspeicher 22 anspricht und dieser sämtliche von einer Interface- oder Schnittstellenschaltung 24 gelieferten Daten zur Speicherung zuführt.

Die im folgenden lediglich noch als Ringadressierer 23 bezeichnete Adressierlogik läuft dabei in einer geschlossenen Schleife um und adressiert nach einer vorgegebenen Schleifendauer oder Aufzeichnungszeit, die variabel ist, jeweils zu Beginn des Umlaufs adressierte und zur Speicherung der Daten freigegebene Speicherzellen des Festspeichers 22 erneut, wodurch dann die früheren Daten überschrieben werden. Die Daten werden über die Schnittstellenschaltungen 24 insgesamt geliefert von einem Tachogenerator oder Wegsensor, der vorzugsweise eine vorgegebene Anzahl vom Impulsen pro Radumdrehung, falls gewünscht, für jedes Rad separat liefert und so unter Bezugnahme auf entsprechende Zeitbasisangaben eine Bestimmung des jeweils zurückgelegten Weges und der entsprechenden Geschwindigkeit ermöglicht. Dieser externe Sensor ist in Fig. 1 mit 25 bezeichnet; mit 26 ist ein Beschleunigungssensor dargestellt, der so ausgelegt ist, dass eine zur Messung der Radumdrehung vollständig unabhängige Grösse eingeführt wird, die in allen kritischen Fällen verfügbar ist und in der Lage ist, beliebige, auf das Fahrzeug einwirkende Beschleunigungen zu erfassen. Bei diesem b-Sensor handelt es sich um ein kapazitives System, bei dem Kondensatorflächen als Biegebalken ausgeführt und so montiert sind, dass die Trägheitskräfte in der jeweils selektierten Achse direkt senkrecht zu beiden Achsen einwirken. Auf Aufbau und Wirkungsweise des Beschleunigungssensors 26 wird im folgenden noch eingegangen.

Zusätzlich zu den Weg-Geschwindigkeitsdaten und den Beschleunigungsdaten gelangen eine Vielzahl von im Grunde beliebigen, für die Auswertung eines Unfalls insoweit aber relevanten Daten zur Bearbeitung und Speicherung, für die stellvertretend für alle sonst noch möglichen Informationen in der Darstellung der Fig. 1 sogenannte Statusbedingungen A und Statusbedingungen B definiert sind; wie in Fig. 1 angegeben, handelt es sich bei den Status-A-Daten beispielsweise um Bremslicht, Blinker links, Blinker rechts, Fernlicht, Hupe, Angaben über ABS (Antiblokkiersystem)-Wirkungen. Die Status-A-Daten stehen stellvertretend für alle für das Fahrgeschehen relevanten Funktionen des Fahrzeugs, die in digitaler Form vorliegen oder in eine solche Form umgewandelt sind und die mit höchster Auflösung verfügbar sein müssen. Sie werden in engen Zeitabständen, beispielsweise 100 ms, wie vorteilhafterweise dann auch die anderen Funktionsdaten des Fahrzeugs, der Speicherung über die Ringadressierung zugeführt, während die Status-B-Daten alle für den Betrieb des Fahrzeugs wichtigen Funktionen umfassen, die nicht mit höchster Auflösung verfügbar sein müssen und daher in grösseren Zeitabständen von beispielsweise 500 ms gespeichert werden.

Die Status-A- und Status-B-Blöcke 27 und 28 können für die Aufbereitung der von ihnen über die Schnittstellenschaltung 24 gelieferten Daten in entsprechender Weise ausgebildet sein, also beispielsweise auch als Wandler physikalischer Grössen in elektrische Ausgangsgrössen, wobei die meisten der Status-A- und Status-B-Daten einfache Ja-Nein-Bedingungen sein können, beispielsweise also, ob die Hupe betätigt wurde oder nicht, so dass entsprechende Ausgänge entweder den Zustand log0 oder log1 aufweisen.

Es ist dann noch ein Zündungsblock 29 vorgesehen, der der Steuerlogikschaltung des Unfalldatenschreibers eine Information darüber zuführt, dass die Zündung eingeschaltet worden ist und schliesslich verfügt die Steuerlogikschaltung selbst über einen Anzeige- oder Alarmblock 30, der so ausgebildet ist, dass dann, wenn eine Sequenz gespeicherter Daten festgeschrieben oder eingefroren worden ist, eine entsprechende Anzeige zur Veranlassung einer Überprüfung und/oder Auswertung bewirkt wird.

Mit 31 ist noch eine Speicherkassette bezeichnet, die als Basisgerätteil, wie gestrichelt angedeutet, die Bauelemente 21, 21a, 22, 23, 26 aufnehmen kann.

Wirkungsweise:

Der grundlegende Funktionsablauf bei dem erfindungsgemässen Datenschreiber ist dann so, dass in dem Festspeicher 22 eine vorgegebene Anzahl von adressierbaren Speicherstellen oder Speicherplätzen vorhanden ist. Bei einem praktischen Ausführungsbeispiel können etwa so viele Speicherplätze im Festspeicher oder Hauptspeicher vorhanden sein, dass drei mal jeweils für eine Aufzeichnungszeit von 60 Sekunden Daten niedergelegt werden können, wobei sich für einen Vorgang eine Aufnahmezeit von 60 Sekunden sowohl als sinnvoll als auch ausreichend erweist. Einer solchen Zeitdauer ist im Stadtverkehr bei 50 km/h eine zurückgelegte Wegstrecke von 833 m, beim Verkehr auf Landstrassen bei 100 km/h eine Wegstrecke von 1667 m und auf der Autobahn bei angenommenen 200 km/h eine Wegstrecke von 3333 m zugeordnet, über die dann ein lückenloser Nachweis über sämtliche relevanten Fahrzeugfunktionen geführt werden kann.

Die Aufzeichnung, also die Niederlegung der Daten im Festspeicher 22 erfolgt zeitabhängig im vorher bestimmten Umfang, wodurch, wie soeben schon dargelegt, die aufgezeichneten Wegstrecken proportional mit der Geschwindigkeit wachsen.

Als Zeitbasis 21a ist eine vom sonstigen System unabhängige Quarzzeitbasis vorgesehen, die einen minimalen Strombedarf aufweist und als der einzige Schaltungsteil, der nicht abgeschaltet werden darf, über einen Notbetrieb mit Pufferbatterie verfügt.

Diese Zeitbasis 21a liefert sowohl den Zähltakt für einen separaten Zeitzähler als auch die System-Taktfrequenz für den gesamten Steuerungsablauf und die Speichervorgänge, wobei es selbstverständlich innerhalb des erfindungsgemässen Rahmens liegt, für die Wahrnehmung der Steuervorgänge und die allgemeine Verwaltung des Systems auch Mikroprozessoren, Einzweckrechner oder ähnliche Einrichtungen einzusetzen.

Der Festspeicher 22 ist dabei üblicherweise als RAM ausgeführt. Die Adressierlogik oder der Ringadressierer legt den begrenzten Speicherumfang einer Aufzeichnungsfrequenz (Dauer beispielsweise 1 Minute) als Zählschleife fest und definiert eine Anfangs- und eine Endadresse. Demnach zählt der Ringadressierer von der Anfangsadresse aufwärts bis zur Endadresse, veranlasst dabei das Einschreiben sämtlicher fahrzeugrelevanter Daten in die einzelnen Speicherzellen und springt beim Erreichen der Endadresse wieder auf die Anfangsadresse zurück, so dass es bei normalem Fahrbetrieb dann zu einem Überschreiben der durch diese Zählschleife gespeicherten Daten im Festspeicher im endlosen Ablauf kommt.

Eine Unterbrechung im zyklischen Umlauf der Zählschleife ergibt sich nur dann, wenn ein Triggerereignis auftritt, welches von der logischen Steuerschaltung errechnet und als Unfall interpretiert wird. Dies kann beispielsweise dadurch geschehen, dass vom Beschleunigungssensor 26 gemeldete Beschleunigungen kontinuierlich mit vorgegebenen Maximalwerten verglichen und auf einen Unfall geschlossen wird, wenn entsprechende Überschreitungen festgestellt werden. Die Entscheidung, wann bzw. ob ein Unfall vorliegt, kann mit grösstmöglicher Sicherheit getroffen werden, wobei die jeweiligen Bewertungskriterien so nahe wie möglich an den im normalen Fahrbetrieb auftretenden Beschleunigungen liegen. Es ist ferner möglich, zusätzlich zu der reinen Überwachung der Beschleunigungen auch andere Daten zur Definition eines Unfalls heranzuziehen, beispielsweise starke Verzögerung in Fahrtrichtung gleichzeitig ohne betätigte Betriebsbremse.

Die Detektion des Triggerereignisses führt dazu, dass die Vorlaufdaten, also die bisher im Festspeicher 22 durch den Umlauf eingeschriebenen Daten eingefroren werden, mit anderen Worten, der Ringadressierer 23 adressiert die zu seiner bisherigen Zählschleife gehörenden Speicherplätze nicht mehr, es wird dann lediglich noch für eine begrenzte Zeit weitergeschrieben, maximal beispielsweise eine halbe Minute und minimal bis zum Fahrzeugstillstand.

Anschliessend kann der Ringadressierer 23 aus dieser Zählschleife herausspringen und eine nächstfolgende Zählschleife, die ebenfalls eine Dauer von einer Minute haben kann, definieren mit entsprechend adressierten weiteren Speicherplätzen im Festspeicher 22, wodurch die Speicherplätze der ersten Zählschleife eingefroren und nicht mehr löschbar sind, und zwar durch keine Mittel, die beispielsweise dem Fahrer zur Verfügung stehen.

Im folgenden wird jetzt zunächst auf ein bevorzugtes Ausführungsbeispiel bezüglich Art, Aufbau und Funktion des verwendeten Beschleunigungssensors 26 eingegangen.

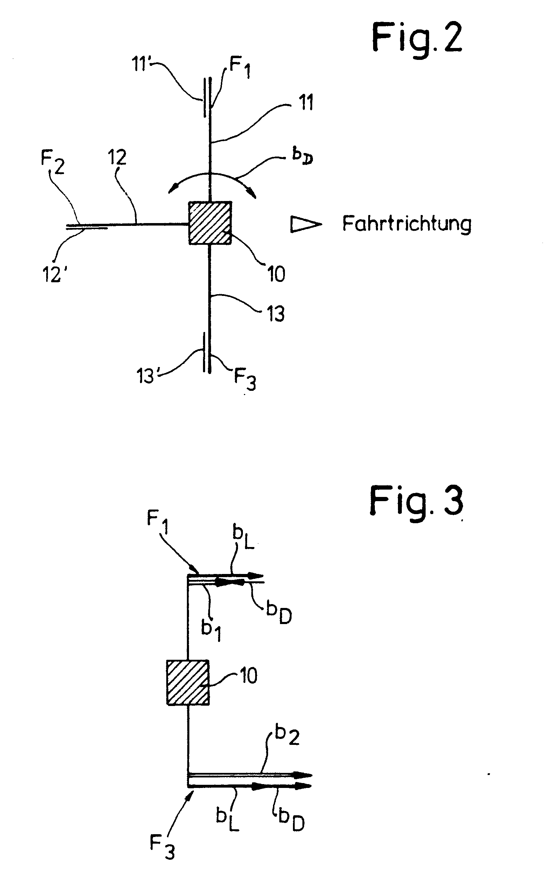

Der Grundgedanke eines in Fig. 2 beispielhaft gezeigten Beschleunigungssensors besteht darin, jeweils eine Fläche eines Kondensators als Biegebalken auszuführen und so anzuordnen, dass einwirkende Trägheitskräfte in der jeweils selektierten Achse senkrecht zur Balkenachse einwirken, wobei der Kondensator als Teil eines elektronischen Oszillators – von im übrigen durchaus beliebigen Schaltungsaufbau – so in die Konzeption des Oszillators einbezogen ist, dass er mindestens mitbestimmend für dessen Schwingfrequenz ist.

In Abhängigkeit zu den Biegekräften ergibt sich dann jeweils für unterschiedliche Durchbiegungen ein linearer Zusammenhang zur Kapazität und bei entsprechender Ausbildung des Oszillators ein linearer Zusammenhang der Kapazitätsänderung mit der Änderung der Schwingfrequenz.

Entsprechend dem vereinfachten Ausführungsbeispiel der Fig. 2 ist ein zentraler Einspannkörper 10 vorgesehen, der Biegebalken in Form von flachen Zungen 11, 12 und 13 einseitig eingespannt lagert und vorzugsweise gleichzeitig elektrisch mit den Zungen so verbunden ist, dass sich am Block des Einspannkörpers 10 das gemeinsame Nullpotential der Schaltung ergibt, in welche der Beschleunigungsaufnehmer eingeordnet ist.

Die Zungen sind bei dem in Fig. 2 gezeigten vereinfachten Ausführungsbeispiel eines Beschleunigungsaufnehmers, wie er insbesondere zur Anwendung bei Kraftfahrzeugen im Bereich von in diese eingebaute Kurzzeit-Unfalldatenschreiber vorgesehen ist, um jeweils 90° zueinander versetzt in einer Ebene, wobei ein in Fahrtrichtung weisender kapazitiver Sensor entbehrlich ist. Es ergeben sich so drei kapazitive Sensoren F1, F2, F3, jeweils gebildet aus den Zungen 11, 12, 13, die stationären Gegenplatten 11', 12' und 13' gegenüberstehen, in vorgegebenem Abstand, so dass sich im Ruhezustand Kondensatoren mit vorgegebenen Kapazitätswerten ergeben.

Sobald auf einen solchen, aus einzelnen kapazitiven Sensoren bestehenden Beschleunigungsaufnehmer Beschleunigungskräfte einwirken, kommt es zu einer Verbiegung der einzelnen Zungen aufgrund der Trägheitskräfte der Zungen und zu einer entsprechenden Annäherung an die stationären Gegenplatten oder Entfernung von diesen, was zu entsprechenden Kapazitätsänderungen an den einzelnen Beschleunigungssensoren aufgrund der sich ändernden Plattenabstände führt. Dabei wird bei negativen Beschleunigungsänderungen, die als eine Annäherung der Platten jedes gebildeten Kondensators definiert sei, eine Kapazitätserhöhung und bei positiver Beschleunigungseinwirkung eine Kapazitätserniedrigung erfolgen.

Entsprechend einem praktischen Ausführungsbeispiel können die Zungen, die von durchgehend gleichförmigem Querschnitt vorzugsweise sind, eine Breite von 1,4 cm bei einer Länge von 2 cm und einer Dicke von 0,03 cm aufweisen und aus einem geeigneten Werkstoff wie beispielsweise Berylliumbronze oder auch zur Erzielung einer noch geringeren Temperaturabhängigkeit aus einem Werkstoff bestehen, wie er z.B. unter dem Warenzeichen «Nivarox» bekannt ist. Beträgt bei einem solchen Ausführungsbeispiel der Normalabstand A zwischen den Platten jedes Kapazitäts-Sensors F1, F2, F3 0,01 cm bei einer überdeckten Länge von 0,8 cm, dann ergeben sich die, aus der folgenden Tabelle entnehmbaren Werte bei vorausgesetzten, einwirkenden Beschleunigungen zwischen −20 g bis +20 g:

| b g | A aussen mm | A mittl. mm | C pF | f Hz |
|---|---|---|---|---|
| −20.0 | 0.0600 | 0.0838 | 11.84 | 422084 |
| −10.0 | 0.0800 | 0.0919 | 10.79 | 463005 |
| − 1.0 | 0.0980 | 0.0992 | 10.00 | 499834 |
| − 0.5 | 0.0990 | 0.0996 | 9.96 | 501880 |
| − 0.2 | 0.0996 | 0.0998 | 9.93 | 503108 |
| − 0.1 | 0.0998 | 0.0999 | 9.93 | 503517 |
| + 0.0 | 0.1000 | 0.1000 | 9.92 | 503926 |
| + 0.1 | 0.1002 | 0.1001 | 9.91 | 504335 |
| + 0.2 | 0.1004 | 0.1002 | 9.90 | 504745 |
| + 0.5 | 0.1010 | 0.1004 | 9.88 | 505972 |
| + 1.0 | 0.1020 | 0.1008 | 9.84 | 508018 |
| +10.0 | 0.1200 | 0.1081 | 9.17 | 544847 |
| +20.0 | 0.1400 | 0.1162 | 8.53 | 585768 |

Aus der Tabelle lässt sich entnehmen, dass eine Grundfrequenz des Oszillators beim Normalabstand A (einwirkende Beschleunigung = 0) von ca. 503,926 KHz zugrundegelegt werden kann, mit entsprechend linearer und gutauswertbarer Frequenzänderung zwischen 422,084 KHz bei g = −20 bis 585,768 KHz bei g = +20; die Kapazitätsänderung in pF schwankt dann zwischen 11,84 und 8,53 pF.

Eine Torsionseinwirkung auf die einzelnen Zungen oder Biegebalken durch Winkelbeschleunigung, im Falle des Beschleunigungsaufnehmers der Fig. 2 also eine Drehbewegung um eine etwa von oben nach unten in der Zeichenebene liegende Achse wirkt sich auf den mittleren Abstand der Kondensatorflächen nicht aus, da eine Verdrehung der Zungen 11 und 12 in diesem Fall eine symmetrische Abstandsänderung um die neutrale Achse bewirkt, die sich selbst kompensiert.

Schwingungen oder Vibrationen wirken sich auf die mittlere Kapazität ebenfalls nicht aus, da zwar überlagerte Kapazitätsänderungen mit der jeweiligen Schwing- oder Vibrationsfrequenz entstehen können, die sich aber über eine vorgesehene Integrationszeit bei der Auswertung der Schwingfrequenz von mindestens 50 ms nicht auswirken können. Mögliche Resonanzfrequenzen der Zungen selbst liegen wegen ihrer Abmessungen in einem erheblich höheren Frequenzbereich und kommen bei dem dargestellten Ausführungsbeispiel nicht zur Auswirkung.

Die schematische Darstellung der Fig. 3 dient zur Beurteilung von einwirkenden Drehbeschleunigungen, $b_D$ wie sie sich auf den in Fig. 2 dargestellten Beschleunigungssensor im Sinne des dort gezeigten Doppelpfeils $b_D$ durchaus ergeben können. Unter der Voraussetzung einer in Fahrtrichtung einwirkenden, vorhandenen Längsschleunigung $b_L$ führt eine Drehbeschleunigung in einer gegebenen Richtung dazu, dass sich bei dem einen Kapazitätssensor, beim Ausführungsbeispiel F1, die einwirkende Drehbeschleunigung $b_D$ vom Wert der Längsbeschleunigung $b_L$ substrahiert, im anderen Fall des Sensors F3 hinzuaddiert. Die beiden Sensoren F1 und F3 liefern daher Angaben über umgesetzte resultierende Beschleunigungswerte von b1 für F1 und b2 für F3. Hieraus lässt sich die Drehbeschleunigung nach folgender Formel ermitteln:

$$b_D = (b2-b1)/2.$$

Die gleichfalls vorliegende Längsbeschleunigung ergibt sich aus der folgenden Formel

$$b_L = (b2+b1)/2.$$

Ferner lassen sich aufgrund der resultierenden Beschleunigungen bezüglich der Richtung der einwirkenden Beschleunigungen die folgende Feststellung treffen: Ist das Ergebnis der ersten, die Drehbeschleunigung betreffenden Formel positiv, dann war die Drehbeschleunigungseinwirkung linksdrehend, im anderen Falle rechtsdrehend. Aus der zweiten Formel für die Längsbeschleunigung ergibt sich bei positivem Ergebnis eine Angabe der Beschleunigung in Fahrtrichtung, bei negativem Ergebnis eine Bremsbeschleunigung gegen die Fahrtrichtung.

Bei dem in Fig. 2 gezeigten Ausführungsbeispiel ist der Kapazitätssensor F2 in Fahrtrichtung liegend angeordnet; daher führen an ihm gemessene Kapazitätsänderungen zu der Feststellung, dass beispielsweise bei einer Beschleunigungseinwirkung in Fahrtrichtung gesehen nach rechts, also in der Zeichenebene nach unten die Beschleunigungsanzeige des Kapazitätssensors F2 positiv, im anderen Falle negativ ist. Natürlich reagiert der Sensor F2 auch auf Drehbeschleunigungen $b_D$ des Fahrzeugs, dann aber gemeinsam mit den Sensoren F1 und F3 in der weiter vorn schon beschriebenen Weise, so dass dann, ... wenn die Sensoren F1 und F3 keine Drehbeschleunigung anzeigen, eine am Sensor F2 festgestellte Beschleunigung in Fahrtrichtung gesehen nach rechts oder links erfolgt ist.

Die mechanische Fertigung der durch diese Trägheitskräfte die Kapazitätsänderungen an F1, F2 und F3 hervorrufenden Zungen kann mit so hoher Genauigkeit erfolgen, dass ein Abgleich lediglich wegen möglicher Montagefehler vorgesehen werden sollte, dabei ist die Materialkonstante E im geforderten Bereich temperaturunabhängig und einer Alterung nicht unterworfen. Die Dielektrizitätskonstante ist ebenfalls temperaturunabhängig, da die gesamte Aufnehmeranordnung vorzugsweise innerhalb eines auf Vakuumbedingungen gebrachten Gehäuses angeordnet ist.

Es empfiehlt sich im übrigen, den jedem Kapazitätssensor zugeordneten Schwingkreis eines Oszillators mit Schmitt-Triggern auf der Basis der Verwendung von C-MOS-Halbleiterelementen aufzubauen, wodurch sich eine noch geringere Temperaturabhängigkeit ergibt; ausserdem ist es empfehlenswert, mit der Betriebsspannung, die an den Kondensatoren anliegt, nicht zu hoch zu gehen, beispielsweise eine Gleichspannung von 5 V zu verwenden, wodurch der durch die Kräfte des elektrischen Feldes zwischen den Platten verursachte Fehler in einer Grössenordnung von 0,1% gehalten werden kann und daher insgesamt nicht störend ist.

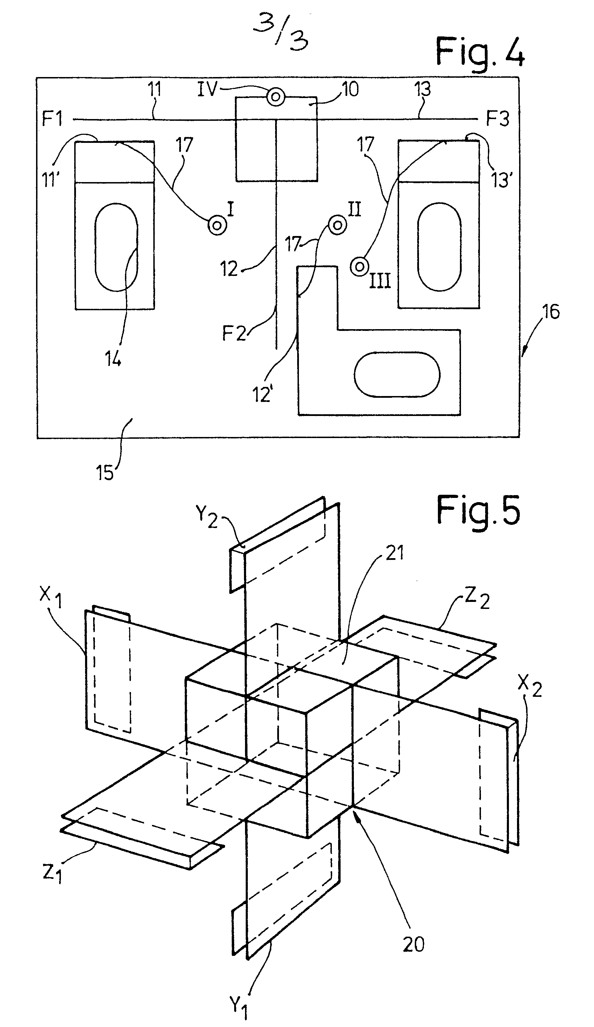

Ein praktisches Ausführungsbeispiel für den Aufbau eines Beschleunigungsaufnehmers in einem Gehäuse ist in Fig. 4 dargestellt; der blockförmige Einspannkörper 10 lagert die Zungen 11, 12 und 13, denen gegenüberliegend die stationären Gegenplatten 11', 12' und 13' angeordnet sind. Die die Gegenelektroden bildenden stationären Platten können an über Langlöcher 14 an der Bodenplatte 15 des Gehäuses 16 befestigte Führungen gehalten sein, so dass eine Verschiebung in Richtung auf die beweglichen Zungen möglich ist, zur anfänglichen Kapazitätseinstellung. Die Gegenplatten 11', 12', 13' sind dabei jeweils isoliert befestigt und ihre Anschlüsse sind über kapazitätsarme Vollkabel 17 zu stationären Anschlusspunkten I, II und III der Platte geführt, wobei der gemeinsame Anschlusspunkt IV von dem Einspannkörper 10 gebildet ist.

Bei dem Ausführungsbeispiel der Fig. 5 ist ein auf Beschleunigungen in allen Richtungen und in allen Drehrichtungen empfindlicher Beschleunigungsaufnehmer bei 20 dargestellt, mit einem zentralen, die einzelnen Zungen lagernden Einspannkörper 21 und insgesamt sechs, jeweils um 90° zueinander um den würfelförmigen Einspannkörper herum angeordneten und in diesen eingespannten Zungen, die mit entsprechenden Gegenplatten Kapazitätssensoren X1, X2; Y1, Y2 und Z1, Z2 bilden. Jeder dieser Kapazitätssensoren ist Teil eines Schwingkreises und daher in der Lage, die auf ihn einwirkende, aus Drehung (Torsion) oder linearer Beschleunigung $b_L$ in positiver und negativer Richtung sich ergebenden Einwirkungen festzustellen, zunächst die Kapazitätsänderungen umzuwandeln und dann in Form einer Frequenzänderung auswertbar zu machen. Durch entsprechende Differenzbildungen lassen sich dann, wie weiter vorn anhand der Darstellung der Fig. 2 gezeigt, die einzelnen Werte der einwirkenden Beschleunigungen ermitteln.

Die folgende Schemadarstellung zeigt die zu speichernden Datensequenzen im zeitlichen Ablauf, wenn man berücksichtigt, dass die aufzuzeichnenden Daten jeder Funktion einer unterschiedlichen zeitlichen Auflösung bedürfen. Legt man für die Beschleunigungsdaten eine Auflösung von 100 ms mindestens zugrunde, dann kann für die Geschwindigkeitsdaten die gleiche Auflösung oder eine solche von 500 ms verwendet werden. Die Statusdaten können ebenfalls in diese beiden Kategorien aufgeteilt werden. Es ergeben sich dann im Zeitabstand von 100 ms die folgenden Datensequenzen:

| 0 | 100 | 200 | 300 | 400 | 500 | 600 | 700 ms |
|------|------|------|--------|------|--------|------|------|
| SZ | | | TZ | | | | EZ |
| vl | vl | vl | vl | vl | vl | vl | vl |
| bl | bl | bl | bl | bl | bl | bl | bl |
| bq | bq | bq | bq | bq | bq | bq | bq |
| bw | bw | bw | bw | bw | bw | bw | bw |
| S.A+B | S.A. | S.A | S.A+B | S.A | S.A+B | S.A | S.A |

Darin bedeuten:

| | | | |
|-----|---------------------|------|----------------------|
| SZ | Startzeit | TZ | Triggerzeit |
| EZ | Stillstandzeit | vl | Längsgeschwindigkeit |
| bl | Längsbeschleunigung | bq | Querbeschleunigung |
| bw | Winkelbeschleunigung | S.A. | Status A |
| S.B | Status B | | |

Die Statusdaten insgesamt belaufen sich bei den hier in Betracht gezogenen, zu speichernden Betriebszuständen und -funktionen auf insgesamt 13 Bit, nämlich 6 Bit für Status A und 7 Bit für Status B.

Unter Bezugnahme auf Fig. 1 wird noch erwähnt, dass der erfindungsgemässe Unfalldatenschreiber mechanisch aus zwei Baugruppen besteht, nämlich dem Basisgerät, welches als Gehäuse fest im Kraftfahrzeug eingebaut ist und Anpassung, Befestigung und Schutz im Kraftfahrzeug übernimmt und gleichzeitig, soweit erforderlich, Bauelemente des Status-A- und des Status-B-Blocks 27, 28 sowie die Schnittstellenschaltungen 24 und des Tachogenerators enthält, während ein Einschub, der auch als Speicherkassette 31 bezeichnet wird, in Fig. 1 umrandet dargestellt und mit dem Bezugszeichen 31 versehen ist. Bei dem Speicherkassetteneinschub handelt es sich um ein kompatibles Teil, welches einen unkomplizierten Austausch einzelner Speicherkassetten 31 ermöglicht bei in allen Basisgeräten genormter Einschuböffnung und welches die Speicher, also Festspeicher 22 und Ringadressierer 23 sowie die Verwaltung (Steuerlogikschaltung mit Zeitbasis) und den Beschleunigungssensor 26 enthält. Die Anordnung des Beschleunigungssensors 26 ebenfalls im Bereich der Speicherkassette 31 hat den Vorzug, dass bei der Entnahme und späteren Auswertung durch die Möglichkeit gezielter Messeinwirkungen auf den Sensorbereich dessen Eichung bzw. Abweichungen vom Standard in die Auswertung der Daten entsprechend einbezogen werden kann.

Die folgenden, jeweils mit kennzeichnenden Überschriften versehenen Erläuterungen erklären genauer die einzelnen Vorgänge und Beziehungen und ergänzen die Gesamtkonzeption in der Darstellung der Fig. 1

Inbetriebnahmezeit

Als erste Werte im Festspeicherbereich des RAM 22 werden die Zeit der Inbetriebnahme, die Seriennummer des Entnahmegerätes und die Fahrzeugdaten eingetragen. Gleichzeitig wird der Zeitzähler auf 0 gesetzt und der Zähltakt freigegeben.

Fahrtbeginn

Jeder Aufzeichnungszyklus beginnt mit dem Eintrag der aktuellen Systemzeit. Als Beginn einer Fahrt (Start) wird definiert:

a) die Zündung ist eingeschaltet – Signal vom Zündungsblock 29.

b) der Impulsgeber des Tachogenerators (Weg- oder Radumdrehungssensor 25) liefert Impulse in einem vorgegebenen Maximalabstand. Mit der ersten folgenden Datensequenz wird die Startzeit SZ eingetragen.

c) Es wird eine Längsbeschleunigung $b_L$ festgestellt.

Fahrtende

Das Ende einer Fahrt wird als Fahzeugstillstand definiert durch

a) das Ausbleiben der Impulse des Tachogenerators in einem vorgegebenen Zeitintervall und

b) der gleichzeitig rechnerisch aus den b-t Funktionen ermittelte Fahrzeugstillstand, beispielsweise fortlaufende Integration oder Beschleunigung über der Zeit;

c) 0-Werte der Beschleunigungen.

Sind alle Bedingungen erfüllt, dann wird mit der letzten Datensequenz die Stillstandszeit als aktuelle Systemzeit eingetragen.

Nachlaufzeit

Ist die Fahrtendezeit eingetragen worden, wird durch den Ringadressierer 23 die nächste Aufzeichnungsschleife durch Hochzählen der Adressen definiert. In dieser Sekundärschleife werden dann im Normalfall 0-Daten aufgezeichnet. Diese Methode ermöglicht bei einem Folgeaufprall den sofortigen Abschluss einer neuen Aufzeichnung und sichert die Daten der primären Schleife vor dem Überschreiben mit 0-Daten. Diese Nachlaufzeit beträgt ca. 3 Minuten bei stehendem Fahrzeug.

Tritt während dieser Sicherheits- oder Nachlaufzeit also kein neues Triggerereignis auf, dann werden die Daten im Bereich des Ringzählers später überschrieben. Tritt während der Sicherheitszeit ein neues Triggerereignis auf, so wird der Adressoffset vorgezogen und eine neue Sequenz mit Eintragung der Triggerzeit gestartet.

Triggerzeit

Die Triggerzeit ist diejenige Systemzeit, zu der ein definiertes Triggerereignis als stattgefundener Unfall definiert und die Zuordnung des Primärspeichers zum Hauptspeicherbereich ausgelöst und damit die Daten in der Speicherschleife gesichert werden.

Diese Systemzeit kann beispielsweise als 3-Byte-Wort zusätzlich in der dem Triggerereignis folgenden Sequenz eingetragen werden und bildet innerhalb einer Aufzeichnung die Bezugsreferenz zu anderen Speichern. Bei der Beurteilung des Verhaltens des Fahrers ist mit dieser Zeit der Ausgangspunkt für eine detaillierte Auflösung des Geschehens festgelegt. Alle sekundärdefinierten Fixpunkte werden von dieser Zeitmarke an berechnet, relative Bezüge zweier korrespondierender Speichersysteme können hergestellt werden, wenn entsprechende Korrelationspunkte innerhalb des Speicherumfangs festgelegt werden.

Man kann dem Triggerbetrieb das folgende Schema zugrundelegen:

| T | | | E | | | | | |
|---|---|---|---|---|---|---|---|---|
| 1 | 2 | 3 | 4 | 5 | 6 | 7 | 8 | 9 |
| 20 | | | Ringadressiererbereich | | | | | 10 |
| 19 | 18 | 17 | 16 | 15 | 14 | 13 | 12 | 11 |

Die Datensequenz startet mit der Triggerzeit, die in die normalen Datenfolgen zusätzlich eingereiht wird. Das Triggerbit wird in Adresse 1 aufgezeichnet, in den Speicherstellen 2 bis 20 befinden sich die Vorlaufdaten von insgesamt 60 Sekunden nach Vereinbarung. Je nach dem weiteren Fahrtverlauf wird das Hochzählen der Ringadressiereradressen vorgenommen und damit eine Sicherung der Daten erreicht. Als Beispiel sei angenommen, dass in der Speicherstelle 5 Stillstand registriert wird. Es wird mit dem Bereich 21 bis 41 sofort ein neuer Schleifenumlauf des Ringadressierers definiert.

Es wird davon ausgegangen, dass im Normalfall ein Fahrzeug spätestens 30 Sekunden nach dem Triggerereignis zum Stillstand gekommen ist. Die rechnerische Auswertung der Geschwindigkeit und die Messdaten der Impulsgeber stellen übereinstimmend den Stillstand fest; jetzt werden die Ringzähleradressen um eine Sequenzbreite hochgezählt. In den gesicherten Daten befinden sich dann im Normalfall ca. 40 Sekunden Vortriggerdaten und 20 Sekunden Posttriggerdaten.

Folgeunfall

Wird nach jedem Triggerereignis eine volle Aufzeichnungssequenz gesichert, dann kann im ungünstigsten Fall ein Folgeaufprall nach einem Auffahrunfall und erfolgten Stillstand die zweite Speichersequenz beanspruchen und damit bis zu 50 Sekunden 0-Daten sichern. Die Erfindung vermeidet dies durch eine dynamische Ermittlung der Verschiebungskonstante für den Ringspeicher (Ringadressierer) 23 sicher, indem leere Speicherstellen nicht berücksichtigt werden und Vor-Triggerdaten nur bis zur Startzeit übernommen werden. Daher wird ein Stadtunfall in der Regel weniger als 60 Sekunden und ein Folgeunfall nicht mehr als 10 bis 20 Sekunden Aufzeichnung erfordern, so dass der vorhandene Speicherumfang optimal genutzt wird.

Realzeit

Die Realzeit ist die auf die Synchronzeitmarke umgerechnete absolute Systemzeit, wobei bei der Gewinnung relativer Daten aus mehreren Systemen, wenn an dem Unfall mehr als ein Kraftfahrzeug beteiligt ist, durch eine Umrechnung auf die Zeit des Entnahmesystems eine Elimination der relativen Zeitfehler der verschiedenen Systeme möglich ist. Eine verbleibende Zeitunsicherheit ist auf einen möglichen Gangfehler der Zeitbasis während der Entnahmezeitdifferenz zweier Systeme zurückzuführen, da es sich hier um relativ kurze Zeitintervalle handelt, ist der Restfehler vernachlässigbar.

Messung der Fahrzeuggeschwindigkeit und Wegstrecke

Eine Gewinnung von geschwindigkeitssynchronen Impulsen kann von einer Endstufe des Getriebes über eine Antriebsübersetzung für den Tachometer abgeleitet werden. Es ist sinnvoll, einen Impulsgeber so auszulegen, dass je Meter Radumfang immer eine gleiche Anzahl von Impulsen erzeugt wird, so dass die Aufzeichnungen in allen Systemen ohne Korrektur miteinander vergleichbar sind. Wird die Anzahl der in einem vorgegebenen Intervall erzeugten Impulse gespeichert, dann steht unabhängig vom Fahrzeugtyp der während des Intervalls zurückgelegte Weg im Speicher.

Es ist auch eine Messung unmittelbar an den Fahrzeugrädern möglich bzw. der Auswertung von drehsynchronen Impulsen dann, wenn ein ABS-System ohnehin vorhanden ist.

Beschleunigungsmessung

Die zur Beurteilung eines Unfalls relevanten Fakten beziehen sich hauptsächlich auf Fahrzeugbewegungen, die wiederum aus auf das Fahrzeug einwirkenden Beschleunigungen resultieren. Auf Art und Aufbau eines Beschleunigungsmessers 26 für alle denkbaren Arten einwirkender Beschleunigungen ist weiter vorn schon eingegangen worden; daher steht ergänzend zur Standardbestimmung der Fahrgeschwindigkeit durch die Aufzeichnung der Längsbeschleunigung noch ein Mittel zur Verfügung, den momentanen Wert einer Fahrgeschwindigkeit durch Integration der b-tFunktion im gewünschten Zeitintervall zu ermitteln. Beide Messverfahren ergänzen sich nahtlos, weil immer dann, wenn das eine Verfahren keine zuverlässigen Messwerte mehr liefert, das andere im optimalen Bereich arbeitet.

Als erstes Beispiel sei angenommen, dass das Fahrzeug mit blockierten Rändern bremst. Die von der Drehung der Räder abgeleiteten Werte für die Fahrgeschwindigkeit sind 0. Jetzt hat jedoch die Beschleunigung einen gut erfassbaren Wert, nämlich im normalen Fahrbetrieb nahe dem Maximum.

Als zweites Beispiel sei angenommen, dass sich das Fahrzeug mit konstanter Geschwindigkeit bewegt. Die jetzt aus der Drehzahl der Räder ermittelten Werte für die Fahrgeschwindigkeit stimmen optimal mit der tatsächlichen Fahrgeschwindigkeit überein, weil die Räder ohne Schlupf abrollen. Die Werte für die Beschleunigung sind 0. Der erfindungsgemässe Beschleunigungssensor 26 ermöglicht daher auch in kritischen Bereichen die Korrektur von konventionell ermittelten Werten für die Geschwindigkeit und springt dann ein, wenn wegen blockierender Räder keine Geschwindigkeitswerte mehr erfasst werden können oder quer einwirkende Stösse wegen in dieser Richtung nicht wirksamer Radbewegungen ohnehin nicht erfasst werden können.

Datenkompression

Ein Notbetrieb bei vollem Speicher kann ermöglicht werden, wenn die Daten des jeweils ältesten aufgezeichneten Ereignisses in ihrem Umfang auf wesentliche Daten reduziert werden. Diese Auswahl kann nach festgelegten Kriterien erfolgen, beispielsweise eine Reduzierung der Daten auf die Zeit zwischen Stillstand und 10 Sekunden vor Triggerereignis. In diesem Fall würde der maximale Speicherbedarf je Ereignis nur noch ca. 20 Sekunden oder 33% betragen.

Stromausfall durch Sabotage

Grundsätzlich kann das Abklemmen des Unfalldatenschreibers von der Stromversorgung nur dann verhindert werden, wenn hierdurch auch mindestens eine zum Betrieb des Kraftfahrzeugs notwendige Funktion ausfällt. Da einfache Unterbrechungen durch den Unfalldatenschreiber überbrückbar sind, empfiehlt es sich, dass z.B. eine Motorelektronik ständig den Betriebszustand des Unfalldatenschreibers abfragt und bei ausbleibender Meldung des Unfalldatenschreibers ihre Funktion einstellt. Als Sabotage kann man den Zustand definieren, dass die Zündung eingeschaltet, der Unfalldatenschreiber jedoch mindestens eine Minute stromlos bleibt. Ein solcher Zustand kann durch ein passives akustisches oder optisches Signal angezeigt werden und wird als Ausfallzeit im Speicherbereich eingetragen und gesichert.

Bevorzugtes Ausführungsbeispiel

Die folgenden Ausführungen betrachten ein bevorzugtes Ausführungsbeispiel in seinem speziellen Aufbau und seiner Wirkungsweise sowie weitere, vorteilhafte Ausgestaltungen der Erfindung.

Ersetzt man den mit Bezug auf Fig. 1 bisher verwendeten Begriff der Steuerlogikschaltung sowie des Ringadressierers durch einen Mikroprozessor 21/23, dann ist der Ringadressierer in seiner Hardware-Bezeichnung das Abbild eines Grundfunktionsablaufs im Mikroprozessor. Unter der Steuerung eines zentralen Takts, der den Systemtakt des Mikroprozessors repräsentiert und abgeleitet ist aus der Quarzzeitbasis 21a, ergibt sich die Arbeitsweise eines solchen Mikroprozessors 21/23 mit zugeordnetem Festspeicher 22 dann wie folgt, wobei hier auch gleich vorteilhafte Ausgestaltungen mit erwähnt werden. Der Mikroprozessor 21/23 des Unfalldatenschreibers läuft ständig, also auch bei stehendem oder geparktem Fahrzeug, wobei ein gegebenenfalls geringfügig höherer Stromverbrauch durch entsprechend ausgebildete Mikroprozessoren auf C-Mos-Basis beispielsweise aufgefangen werden können.

Auch werden die Messungen bezüglich Geschwindigkeit und Beschleunigungen sowie der Status-Werte des Fahrzeugs durchlaufend durchgeführt, eine Aufzeichnung dieser gemessenen erfolgt jedoch nur bei Bewegung des Fahrzeugs. Ebenfalls laufen bei stehendem Fahrzeug die Berechnungen im Mikroprozessor weiter, die dieser beispielsweise durch entsprechende Verknüpfungen der Ausgangswerte der b-Sensoren 26 durchführen muss, um zur Erfassung eines unfallbedingten Triggerereignisses aus den gemessenen Beschleunigungswerten Drehbeschleunigungen $b_D$ oder Winkelbeschleunigungen $b_w$ feststellen zu können. Eine besonders vorteilhafte Ausgestaltung vorliegender Erfindung wird dabei in der Massnahme gesehen, dass nach jedem erfolgten Halt des Fahrzeugs ein Zählvorgang eingeleitet wird, der die jeweilige reine Haltezeit erfasst – es wird also, beispielsweise mit dem quarzzeitgesteuerten Systemtakt – ein Zähler gestartet. Sobald sich das Fahrzeug dann wieder bewegt, beginnt die neue Aufzeichnungssequenz der Daten mit dem Eintrag dieses erreichten Zählerstands, der insofern lediglich einen einzigen Wert darstellt und die Startmarke für das jetzt beginnende Einschreiben nachfolgender Daten im beispielsweise 100 ms-Abstand auf eine Ringschleife im Speicher 22 definiert. Mit anderen Worten, der Mikroprozessor 21/23 zählt bzw. definiert durch einfache Inkrement- bzw. Dekrementbildung Speicherbereiche (Adressierung), die als zyklisch umlaufende einfache Zählschleife eine Speicherschleife definieren, in welche die gemessenen Daten – die errechneten Daten brauchen nicht eingetragen zu werden, da sich diese aus den gemessenen Daten zu jedem späteren Zeitpunkt wieder berechnen lassen – eingeschrieben werden. Erreicht diese (primäre) Zählschleife einen vorgegebenen Wert, dann springt diese wieder auf die Startaddresse und die zuerst eingetragenen Daten in diese Speicherschleife werden überschrieben. Eine solche einfache primäre Zählschleife kann Daten beispielsweise für die Dauer von 1 Minute aufnehmen, wenn das Fahrzeug durchlaufend in Bewegung ist. Ergeben sich aber durch Zwischenhalte Leerzeiten, die zu entsprechenden Leerdaten führen, dann werden die reinen Haltezeiten durch den weiter vorn schon erwähnten Zählvorgang erfasst, so dass durch eine solche Betriebsart erreicht wird, dass z.B. bei einem oder mehreren Ampelhalten die im Speicher vorhandenen Fahrdaten nicht durch die sich hierbei ergebenden nachfolgenden Leerdaten überschrieben werden. In einem solchen Fall lässt sich, wie einzusehen ist, auf eine für den Fahrbetrieb eine Dauer von 1 Minute Daten aufnehmende Speicherschleife unter Umständen wesentlich mehr Datenmaterial einschreiben und insofern komprimieren.

Die Interfaceschaltung für die Beschleunigungs- oder Wegesensoren kann beispielsweise vier gepufferte Zähler enthalten, d.h. Zähler, deren Ausgänge gepuffert auf eine Busleitung gegeben werden. Der Mikroprozessor 21/23 fragt entsprechend seiner Programmierung diese Zählerstände ab, wobei er vorher selbst einen Zählerstop einleitet. Sofort nach Abfrage werden die entsprechenden Zähler für die Beschleunigung und Wegsensoren wieder rückgesetzt und beginnen ihren Zählvorgang erneut – in der Zwischenzeit, nämlich bei den hier angenommenen 100 ms Abständen bezüglich der jeweiligen Dateneintragungen hat der Mikroprozessor 21/23 hinreichend Zeit, um durch geeignete Verknüpfungen der gemessenen und von ihm abgefragten Daten ein unfallbedingtes Triggerereignis zu errechnen. Ein solches Triggerereignis ist selbstverständlich immer dann gegeben, wenn einer der erfassten Beschleunigungswerte von sich aus schon einen vorgegebenen Schwellwert überschreitet – ergänzend hierzu berechnet der Mikroprozessor 21/23 selbstverständlich resultierende Werte aus den Längs- und Querbeschleunigungsmessungen und kann daher auch dann ein unfallbedingtes Triggerereignis feststellen, wenn die Beschleunigungswerte einzeln den jeweiligen Sollwert nicht überschreiten. Die Ermittlung der Drehbeschleunigung $b_D$ ist dabei eine einfache Subtraktion, wie weiter vorn schon erwähnt, eine Winkelbeschleunigung $b_w$ lässt sich entsprechend mittels eines Algorithmus errechnen. Zu der Erfassung eines Triggerereignisses, dessen Feststellung grundsätzlich eine weitere, im folgenden erläuterte Funktion des Mikroprozessors einleitet, noch folgendes. Die Erfindung ermöglicht mit hoher Sicherheit auch die Erfassung reiner Personenunfälle, da die ermittelten Daten einer Gewichtung unterworfen werden können. So kann der Mikroprozessor 21/23 durch Berechnungen ein Triggerereignis beispielsweise dann feststellen, wenn die Längsbeschleunigung $b_w$ einen bestimmten Wert erreicht, der gegebenenfalls weit unter einem angenommenen Schwellwert liegt, andererseits aber bei diesem erreichten Wert die Bremse nicht betätigt worden ist. Dies lässt auf einen Personenunfall schliessen – desgleichen können durch entsprechende Gewichtung auch bei Vollbremsungen auftretende zusätzliche Beschleunigungsänderungen, die sich als Stösse am Kraftfahrzeug definieren lassen, wenn dieser bei einer Vollbremsung auf ein Hindernis trifft, im Sinne der Feststellung eines Triggerereignisses ausgewertet werden.

Immer dann, wenn ein solches Triggerereignis aufgetreten ist, können zwei Fälle unterschieden werden.

Erfolgt keine Verminderung der Geschwindigkeit bis zum schliesslichen Halt, dann kann daraus geschlossen werden, dass es sich um einen Fahrerfluchtfall handelt, und der Mikroprozessor 21/23 verlässt dann von selbst, also auch ohne dass das Fahrzeug hält, die primäre Zählschleife für die Dateneintragung, er veranlasst also eine Erhöhung der Startadresse für die Aufzeichnung um den kompletten Versatz der (primären) Speicherschleife, und zwar, und dies gilt für alle Fälle des Auftretens eines Triggerereignisses, entweder zurückgerechnet bis zum letzten Halt des Fahrzeugs (Datenumfang zwischen zwei Startmarken – wodurch immer nur die für den jeweiligen Unfall relevanten Daten gesichert und der verfügbare Speicherraum optimal genutzt werden kann) oder, falls seit dem letzten Halt ein längerer Zeitraum als für die primäre Zählschleife (1 Minute) vergangen ist, eben das Einfrieren dieser einminütigen Speicherzählschleife dadurch, dass der Mikroprozessor jetzt mit der um den kompletten Offset erhöhten neuen Startadresse arbeitet.

Auf diese Weise brauchen im übrigen sog. Vorlauf- bzw. Nachlaufzeiten nicht mehr festgelegt, also berücksichtigt zu werden, und es sind Mehraufzeichnungen (Folgeunfälle) möglich.

Kommt andererseits nach Feststellung eines Triggerereignisses das Fahrzeug, wie es üblich ist, zu einem Halt, dann stoppt die Eintragung mit dem Fahrzeugstillstand, die neue Startadresse wird definiert, gegebenenfalls werden mit dem Offset die Nullfrequenzen der Beschleunigungsgeber 26 eingetragen, und der Zählvorgang wird gestartet, um zu jedem späteren Zeitpunkt, wie gleich noch erläutert wird, einen Bezug zur Absolutzeit herstellen zu können.

Eine dritte Möglichkeit, Unfalldaten auch ohne Errechnung bzw. Feststellung eines Triggerereignisses durch Mikroprozessor 21/23 bis zur Auswertung zu speichern, ergibt sich aufgrund der vorteilhaften Grundkonzeption vorliegender Erfindung dadurch, dass bei einem Unfall, wenn dieser beispielsweise personenbezogen ist und/oder die Kollision mit einem evtl. nur sehr kleinen Hindernis in ihren Auswirkungen so gering ist, dass der Rechner ein Triggerereignis nicht ausmachen kann, die eingeschriebenen Daten dennoch deshalb gespeichert bleiben, weil, wie weiter vorn schon erwähnt, bei jedem Halt- und ein solcher ergibt sich, normales Verhalten vorausgesetzt, bei jedem Unfall durch die Reaktion des Fahrers – die ferner ermittelten (gemessenen) Daten nicht mehr in den Speicher übernommen werden, sondern diese reine Haltezeit durch das Starten eines Zählers erfasst wird.

Veranlasst daher der von dem Unfall betroffene Verkehrsteilnehmer die Entnahme der Speicherkassette 31 nach einem solchen, von ihm selbst festgestellten Unfall, dann sind die möglicherweise seine Unschuld beweisenden Daten nicht verloren, sondern in der (primären) Speicherschleife aufgezeichnet, zusammen mit der seit dem Halt des Fahrzeugs vergangenen Zeit, so dass so auch ein lückenloser Bezug zur Absolutzeit hergestellt werden kann.

Der weitere Vorgang ist dann so, dass zur Auswertung die Speicherkassette 31, die in bevorzugter Ausführungsform auch die Zeitbasis, 21a den von ihr in seinem Systemtakt abhängenden Mikroprozessor 21/23, sowie mindestens die Beschleunigungssensoren 26 umfasst, entnommen wird. Bei dieser Entnahme läuft der zur Erfassung der Haltezeit gestartete Zähler weiter. Wird die Speicherkassette 31 dann in einer Auswertestation, was vorgezogen wird, ausgelesen, dann stoppt der Rechner der Auswertestation den Zeitzähler, und es werden die Absolutzeit, über welche die Auswertestation ja verfügt, sowie der Zählerstand des Zeitzählers den ausgelesenen Daten angefügt. Durch diese nach rückwärts gerichtete Errechnungsmöglichkeit unter Einschluss der Zählerposition des Haltezeit-Zählers ist es natürlich möglich, einen lückenlosen Bezug zur Absolutzeit herzustellen, wobei alle Zeitzähler auf den (sehr geringfügigen) Gangfehler der Quarzzeitbasis des Unfalldatenschreibers während der Zählerzeit reduziert werden. Auf diese Weise ist es möglich, beliebig viele, unabhängige Unfalldatenschreiber-Speicher direkt miteinander in Bezug zu setzen, da alle Speicherinhalte eine gemeinsame Zeitmarke enthalten. Durch eine Bestimmung der Gangabweichung der Quarzzeitbasis jedes Unfalldatenschreibers beim Auslesen kann dann auch der geringfügige relative Gangfehler auf Null zurückgeführt werden. Es ist auf diese Weise möglich, unter Umständen auch noch mehrere Wochen zurückliegende Unfälle, die durch Fahrerflucht nicht zur unmittelbaren Auswertung der Speicherkassette geführt haben, festzustellen, denn bei einem solchen Unfall wird durch die Reaktion des Mikroprozessors auf das von ihm selbst festgestellte Triggerereignis sowohl, wie nach jedem Triggerereignis, die Zählschleife um den kompletten Offset neu definiert, d.h. die Startadresse entsprechend erhöht, so dass der Unfalldatenschreiber jetzt in einer sekundären Zählschleife läuft, als auch gleichzeitig eine Zeitzählung in Gang gesetzt, die nicht mehr gestoppt wird und die nur eine Speicherstelle im Festspeicher 22 besetzt. Die Organisation von Mikroprozessor 21/23 mit Festspeicher 22 kann dann weiter so getroffen sein, dass auch bei zyklischem Zählschleifenumlauf in der sekundären (neuen) Speicherschleife Zwischenhalts wieder durch entsprechendes, paralleles Zählen (des gleichen Systemtaktes) erfasst werden.

Durch das ständige Arbeiten des Mikroprozessors 21/23 und die Messung sowie Verrechnung der eingehenden Daten sind natürlich auch Unfallgeschehen am stehenden oder geparkten Fahrzeug erfassbar, denn sobald einer der b-Sensoren von seiner Nullfrequenz abweichende Werte liefert, wie sie bei einem Auffahrunfall auf ein stehendes Fahrzeug auftreten, wird dies vom Mikroprozessor natürlich als Bewegung des Fahrzeugs interpretiert und nach Eintragung des erreichten Zeitzählerstands (für die Haltezeit) startet eine neue Aufzeichnungsfrequenz. Kommt das kollidierte parkende Fahrzeug anschliessend wieder zur Ruhe, dann wird dies als neuer Fahrzeughalt interpretiert und der Zählvorgang wieder eingeleitet, so dass jederzeit die zur Kollision führenden Daten erfasst werden können, wenn ein solcher Unfall zu einem späteren Zeitpunkt bemerkt und die Speicherkassette zur Auswertung gegeben wird. Es lässt sich dann auch der Absolutzeitpunkt der Fahrzeugbeschädigung noch feststellen.

**Patentansprüche**

1. Verfahren zur kurzzeitigen Aufnahme bzw. Speicherung von unfallbezogenen Daten und Ereignissen bei Kraftfahrzeugen, wobei durch Erfassung von Radumdrehungen Daten bezüglich zurückgelegter Fahrtstrecke und Fahrzeuggeschwindigkeit, mittels Beschleunigungssensoren Daten für Längs- und Querbeschleunigung des Fahrzeugs und gegebenenfalls durch Erfassung sonstiger interessierender Betriebszustände diese angebende Daten gewonnen, einer Analog/Digitalwandlung unterworfen und mittels eines zentralen Taktes für die Datenbewegung kurzzeitig zwischengespeichert bzw. nach Auftreten eines Unfalls unter Verwendung eines Festspeichers unlöschbar gespeichert werden, dadurch gekennzeichnet, dass sämtliche erfassten Daten in digitaler Form zeitlich fortlaufend im durch den zentralen Takt gegebenen zeitlichen Abstand auf Speicherplätze des Festspeichers (22) durch Definieren einer in einer Maximalschleife umlaufenden Adressierung eingeschrieben werden, dass die Beschleunigungsdaten dabei durch die direkte Auswertung von Frequenzänderungen von Beschleunigungssensoren auf kapazitiver Grundlage enthaltenden Schwingschaltungen gewonnen werden, und dass bei Auftreten eines durch ein Unfallgeschehen verursachten Triggerereignisses die Adressierung durch Startadressenerweiterung (Änderung der Startadresse) in mindestens eine weitere, die bisherigen Festspeicheradressen nicht mehr enthaltende Sekundäradressierschleife übergeht derart, dass sämtliche zeitlich vor dem Unfall liegenden Daten bis zur Auswertung unlöschbar gespeichert bleiben.

2. Verfahren nach Anspruch 1, dadurch gekennzeichnet, dass nach einem Fahrzeughalt bzw. bei stehendem Fahrzeug die Belegung der Speicherplätze des Festspeichers (22) durch das Aufzeichnen der Datensequenz unterbrochen und zur Erfassung der reinen Haltezeit ein Zählvorgang gestartet wird und dass bei erneuter Bewegung des Fahrzeugs die neue Aufzeichnungssequenz mit dem Eintrag des Zählerstandes als Startmarke beginnt.

3. Verfahren nach Anspruch 1 oder 2, dadurch gekennzeichnet, dass der zentrale, die Datenbewegung und die Zählvorgänge bestimmende Systemtakt von einer Quarzzeitbasis (21a) vorgegeben ist.

4. Verfahren nach einem der Ansprüche 1 bis 3, dadurch gekennzeichnet, dass durch Vergleich gemessener Beschleunigungsdaten (Längs- und Querbeschleunigung) bzw. errechneter Beschleunigungsdaten (Resultierende von Längs- und Querbeschleunigung, Winkelbeschleunigung) und Vergleich mit gegebenenfalls auf andere Fahrzeug-Statusdaten (Bremsung) bezogenen Schwellwerten sowie gegebenenfalls unter Einbeziehung von Weg- und Geschwindigkeitsdaten ein unfallbezogenes Triggerereignis festgestellt und durch Speicherversatz (Definition einer neuen, um einen kompletten Versatz (Offset) für eine gegebene Speicherschleife erhöhter Startadresse) in einem anderen Speicherbereich sämtliche Fahrzeugdaten weiter aufgezeichnet werden (sekundäre Adressierzählschleife).

5. Verfahren nach einem der Ansprüche 1 bis 4, dadurch gekennzeichnet, dass der Offset für die Startadressenerhöhung bei Auftreten eines Triggerereignisses entweder auf eine komplette Speicherschleife bezogen wird oder auf den gespeicherten Datenumfang einer zurückliegenden Aufzeichnungssequenz zwischen zwei Startmarken, die mit dem Eintrag des durch einen vorherigen Halt des Fahrzeugs veranlassten Zählerstands beginnt.

6. Verfahren nach einem der Ansprüche 1 bis 5, dadurch gekennzeichnet, dass nach jedem Triggerereignis ohne bzw. mit nachfolgendem Fahrzeughalt der Zeitzählvorgang durch systemtaktbedingtes Hochzählen einer Speicherstelle im Festspeicher (22) anläuft und solange durchgeführt wird, bis die Speicherkassette (31) einschliesslich Zeitbasis (21a), Mikroprozessorschaltung (21/23), Festspeicher (22) und den Beschleunigungssensoren (26) zur Auswertung ausgelesen und der erreichte Zeitzählerstand mit der Absolutzeit der Auswertestation in Bezug gesetzt wird derart, dass im Moment des Auswertens eine lückenlose absolute Zeitbestimmung bezüglich des Eintritts des Triggerereignisses erfolgt.

7. Verfahren nach einem oder mehreren der Ansprüche 1 bis 6, dadurch gekennzeichnet, dass zur automatischen Eichung der Beschleunigungssensoren (26) die jeweiligen aktuellen Nullfrequenzen bei jedem Fahrzeugstart (Beginn der Aufzeichnung) in den Speicher eingeschrieben werden.

8. Unfalldatenschreiber zur Durchführung des Verfahrens nach einem oder mehreren der Ansprüche 1 bis 7, mit Radumdrehungen abtastenden Gebern zur Ermittlung von zurückgelegter Fahrstrecke und Fahrzeuggeschwindigkeit, mit Beschleunigungssensoren für die Erfassung von Längs- und Querbeschleunigungen, gegebenenfalls mit weiteren Sensoren zur Erfassung sonstiger interessierender Betriebszustände, mit Mitteln zur Analog/Digitalwandlung der erfassten Daten, mit einem zentralen Taktgeber für die Datenbewegung, ferner mit Speichermitteln zur kurzzeitigen Zwischenspeicherung und mit einem Festspeicher, der nach Auftreten eines Unfalls (Triggerereignis) zur unlöschbaren Speicherung der nachfolgend auswertbaren erfassten Daten dient, dadurch gekennzeichnet, dass der Festspeicher (22) zur umlaufenden Speicherung der erfassten Daten zunächst in einer ersten Speicherschleife mit einer vorgegebenen Anzahl von Speicherplätzen dient, dass zur Erfassung der Beschleunigungsdaten Schwingschaltungen mit Beschleunigungssensoren (26) auf kapazitiver Grundlage vorgesehen sind, wobei die von diesen abgegebenen Frequenzen unmittelbar der digitalen Zählung und nachfolgenden Speicherung im Festspeicher (22) zuführbar sind und dass Verrechnungsmittel vorgesehen sind, die unter Auswertung von erfassten bzw. berechneten Beschleunigungsdaten und gegebenenfalls weiterer Fahrzeugdaten den Zeitpunkt eines unfallbezogenen Triggerereignisses vorgeben derart, dass unter Erhöhung der Startadresse für die Datenspeicherung um den kompletten Versatz der (primären), gegebenenfalls reduzierten Speicherschleife eine neue (sekundäre) Speicherschleife definiert wird zur nachfolgenden Datenspeicherung.

9. Unfalldatenschreiber nach Anspruch 8, dadurch gekennzeichnet, dass Zeitzählmittel vorgesehen sind, die bei jedem Fahrzeughalt gestartet durch den quarzzeitbezogenen Systemtakt ihren Speicherinhalt bis zur erneuten Fahrzeugbewegung verändern, wobei der jeweils erreichte Zählerstand als Startmarke mit der neuen Aufzeichnungssequenz gespeichert wird.

10. Unfalldatenschreiber nach Anspruch 8 oder 9, dadurch gekennzeichnet, dass periphere, zusätzliche Betriebszustände des Kraftfahrzeugs als mit hoher Auflösung (Status-A-Daten) und mit normaler Auflösung zu speichernde Daten (Status-B-Daten) definiert und in die Datensequenzen einbezogen sind.

11. Unfalldatenschreiber nach einem der Ansprüche 8 bis 10, dadurch gekennzeichnet, dass der Festspeicher (22) mit der Datenverwaltung und Organisation (Steuerlogikschaltung 21 und Ringadressierer 23 bzw. Mikroprozessor 21/23) zusammen mit den Beschleunigungssensoren (26) getrennt zu einem Basisgeräteteil in Form einer Speicherkassette (31) ausgebildet sind, wobei das einen Einschub für die Speicherkassette (31) aufweisende Basisgerät die Schnittstellen (24) für die Übermittlung der digitalen Statusdaten, Pufferspeicher und Stromversorgung enthält.

12. Unfalldatenschreiber nach einem der Ansprüche 8 bis 11, dadurch gekennzeichnet, dass der Beschleunigungssensor (26) mindestens einen, einseitig eingespannten, an seinem anderen Ende mit einer stationären Gegenplatte (11', 12', 13') einen Kondensator bildenden Biegebalken (Zungen 11, 12, 13) umfasst, sowie einen zugeordneten Oszillator, dessen Schwingfrequenz sich in Abhängigkeit zur Kapazitätsänderung am Kondensator bei einer Beschleunigungseinwirkung auswertbar ändert.

13. Unfalldatenschreiber nach Anspruch 12, dadurch gekennzeichnet, dass jeweils um 90° versetzt an einem gemeinsamen blockförmigen Einspannkörper (10) einseitig befestigte Zungen (11, 12, 13) vorgesehen sind, denen gegenüberliegend die Zungen über eine vorgegebene Länge überdeckend, die stationären Gegenplatten zur Bildung von Kapazitätssensoren (F1, F2, F3) angeordnet sind.

14. Unfalldatenschreiber nach Anspruch 12 oder 13, dadurch gekennzeichnet, dass der blockförmige Einspannkörper (10), den elektrischen Bezugspunkt bildend, in einem geschlossenen, unter Vakuum stehenden Gehäuse, welches auf der Speicherkassette (31) befestigt oder Teil derselben ist, angeordnet ist, wobei an der Gehäusebodenplatte (15) Überführungskörper (19) befestigt und die Gegenplatten (11', 12', 13') der jeweils gebildeten Kondensatoren in ihrem Abstand justierbar zu den Zungen (11, 12, 13) befestigt sind.

**Revendications**

1. Procédé pour l'enregistrement et la mémorisation de courte durée de données et d'évènements relatifs à un accident sur des véhicules, avec obtention de données relatives à la distance parcourue et à la vitesse du véhicule par détermination des tours de roue, de données d'accélération longitudinale et transversale du véhicule à l'aide de capteurs d'accélération et le cas échéant de données indiquant d'autres régimes intéressants par détermination de ces derniers, les données subissant ensuite une conversion analogique-numérique puis une brève mémorisation temporaire à l'aide d'une fréquence d'horloge centrale pour le transfert de données ou, aprés l'apparition d'un accident, une mémorisation ineffaçable dans une mémoire morte, ledit procédé étant caractérisé en ce que toutes les données saisies sont écrites sous forme numérique et continûment à des emplacements de la mémoire morte (22), avec l'intervalle temporel fixé par la fréquence d'horloge centrale, par définition d'un adressage cylique dans une boucle maximale; les données d'accélération sont obtenues par évaluation directe des variations de fréquence de capteurs d'accélération capacitifs comportant des circuits oscillants; et lors de l'apparition d'un évènement déclencheur produit par un accident, l'adressage passe par extension de l'adresse de départ (modification de l'adresse de départ) dans au moins une autre boucle d'adressage secondaire, ne contenant plus les adresses antérieures en mémoire morte, de façon que toutes les données précédant l'accident demeurent mémorisées de façon ineffaçable jusqu'au dépouillement.

2. Procédé selon revendication 1, caractérisé en ce qu'après un arrêt du véhicule ou pendant une immobilisation de ce dernier, l'occupation des emplacements de la mémoire morte (22) est interrompue par l'enregistrement de la séquence de données et un comptage est lance pour la détermination du temps d'arrêt pur; et lors d'un nouveau déplacement du véhicule, la nouvelle séquence d'enregistrement commence par l'entrée de l'indication du compteur sous forme d'un repère de départ.

3. Procédé selon une des revendications 1 ou 2, caractérisé en ce que la fréquence d'horloge centrale du système, déterminant le transfert des données et les opérations de comptage, est fixée par une base de temps à quartz (21a).

4. Procédé selon une quelconque des revendications 1 à 3, caractérisé en ce qu'un évènement déclencheur relatif à un accident est constaté par comparaison de données d'accélération mesurées (accélération longitudinale et transversale) ou calculées (résultante de l'accélération longitudinale et transversale, accélération angulaire), comparaison à des seuils rapportés le cas échéant à d'autres données d'état du véhicule (freinage) et le cas échéant prise en considération de données de distance et de vitesse; et l'enregistrement de toutes les données du véhicule se poursuit (boucle de comptage d'adressage secondaire) par décalage dans une autre zone de mémoire (définition d'une nouvelle adresse de départ incrémentée d'un décalage complet (offset) pour une boucle de mémoire donnée).

5. Procédé selon une quelconque des revendications 1 à 4, caractérisé en ce que le décalage pour l'incrémentation de l'adresse de départ est, lors de l'apparition d'un évènement déclencheur, rapporté à une boucle de mémoire complète ou aux données d'une séquence d'enregistrement antérieure mémorisée entre deux repères de départ et commençant par l'introduction de l'indication du compteur produite par l'arrêt antérieur du véhicule.

6. Procédé selon une quelconque des revendications 1 à 5, caractérisé en ce qu'après chaque évènement déclencheur sans ou avec arrêt consécutif du véhicule, l'opération de comptage du temps démarre par l'incrémentation d'une cellule de la mémoire morte (22) par la fréquence d'horloge système et se poursuit jusqu'à ce que la cassette de mémoire (31) comprenant la base de temps (21a), le microprocessur (21/23), la mémoire morte (22) et les capteurs d'accélération (26), soit lue pour dépouillement et l'indication du compteur de temps soit reliée au temps absolu du poste de dépouillement, de façon qu'une détermination continue du temps absolu de l'apparition de l'évènement déclencheur soit faite au moment du dépouillement.

7. Procédé selon une quelconque des revendications 1 à 6, caractérisé en ce que les fréquences 0 effectives considérées sont inscrites dans la mémoire à chaque démarrage du véhicule (début de l'enregistrement) pour l'étalonnage automatique des capteurs d'accélération (26).

8. Enregistreur de données d'accident pour la mise en œuvre du procécé selon une quelconque des revendications 1 à 7, avec des capteurs de tours de roue pour détermination de la distance parcourue et de la vitesse du véhicule, avec des capteurs d'accélération pour la détermination des accélérations longitudinale et transversale, avec le cas échéant d'autres capteurs pour la détermination d'autres régimes intéressants, avec des moyens de conversion analogique-numérique des données saisies, avec une horloge centrale pour le transfert des données, avec des moyens de mémorisation temporaire de courte durée et avec une mémoire morte qui, après l'apparition d'un accident (évènement déclencheur), assure la mémorisation ineffaçable des données saisies et dépouillables ultérieurement, ledit enregistreur étant caractérisé en ce que la mémoire morte (22) de mémorisation cyclique des données saisies sert d'abord dans une première boucle de mémoire avec un nombre prédéterminé d'emplacements; des circuits oscillants avec capteurs d'accélération (26) capacitifs sont prévus pour la détermination des données d'accélération, les fréquences qu'ils délivrent étant appliquées directement au comptage numérique et à la mémoire morte (22); et des moyens de calcul sont prévus qui, par dépouillement de données d'accélération mesurées ou calculées et le cas échéant d'autres données du véhicule, fixent l'instant d'un évènement déclencheur dû à un accident de façon qu'une nouvelle boucle de mémoire (secondaire) est définie pour la mémorisation suivante de données par une incrémentation de l'adresse de départ de mémorisation des données égale au décalage complet de la boucle de mémoire (primaire), réduite le cas échéant.

9. Enregistreur de données d'accident selon revendication 8, caractérisé en ce que des moyens de comptage du temps sont prévus qui, démarrés à chaque arrêt du véhicule par la fréquence d'horloge système dérivée de la base de temps à quartz, modifient leur contenu de mémoire jusqu'à un nouveau déplacement du véhicule, l'indication atteinte du compteur étant mémorisée comme repère de départ avec la nouvelle séquence d'enregistrement.

10. Enregistreur de données d'accident selon une des revendications 8 ou 9, caractérisé en ce que des états périphériques suplémentaires du véhicule sont définis comme données à mémoriser avec une résolution élevée (données d'état A) ou avec une résolution normale (données d'état B) et introduits dans les séquences de données.

11. Enregistreur de données d'accident selon une quelconque des revendications 8 à 10, caractérisé en ce que la mémoire morte (22), la gestion des données et l'organisation (circuit logique de commande 21 et adresseur en anneau 23 ou microprocesseur 21/23) et les capteurs d'accélération (26) sont réalisés sous forme d'une cassette de mémoire (31) faisant partie d'un appareil de base dont le tiroir contient les interfaces (24) pour le transfert des données d'état numériques, les mémoires tampons et l'alimentation.

12. Enregistreur de données d'accident selon une quelconque des revendications 8 à 11, caractérisé en ce que le capteur d'accélération (26) comprend au moins une poutre de flexion (languettes 11, 12, 13) dont une extrémité est encastrée et dont la seconde extrémité forme un condensateur avec une armature fixe (11', 12', 13'), ainsi qu'un oscillateur affecté, dont la fréquence varie de façon dépouillable en fonction de la variation de capacité du condensateur soumis à une accélération.

13. Enregistreur de données d'accident selon revendication 12, caractérisé par des languettes (11, 12, 13) décalées de 90° entre elles, dont une extrémité est encastrée dans un bloc de fixation (10) commun et en regard desquelles sont disposées les armatures fixes, les recouvrant sur une longueur prédéterminée pour former des capteurs capacitifs (F1, F2, F3).

14. Enregistreur de données d'accident selon une des revendications 12 ou 13, caractérisé en ce que le bloc de fixation (10), qui constitue le point de référence électrique, est logé dans un boîtier fermé sous vide qui est fixé sur la cassette de mémoire (31) ou en fait partie, des pièces de raccordement (19) étant fixées sur la plaque de base (15) du boîtier et les armatures fixes (11', 12', 13') des divers condensateurs formés étant fixées à une distance ajustable des languettes (11, 12, 13).

**Claims**

1. Method for the short-term recording or storage of accident-related data and events in the case of motor vehicles, wherein data relating to traversed distance of travel and speed of travel are obtained through detection of wheel rotations, data for longitudinal and transverse acceleration of the vehicle are obtained by means of acceleration sensors and data stating other interesting operational states are in a given case obtained through their detection, subjected to an analog-to-digital conversion and, by means of a central clock pulse for the data movement, either stored intermediately for a short term or stored inerasably with the use of a fixed store after the occurrence of an accident, characterised thereby, that all detected data are entered in digital form continuously in time into storage places of the fixed store (22) at a time spacing given by the central clock pulse through definition of an addressing circulating in a maximum loop, that the acceleration data are in that case obtained through the direct evaluation of frequency changes of oscillatory circuits containing acceleration sensors on capacitive base and that on the appearance of a trigger event caused by an accident event, the addressing passes through start address widening (change in the start address) over into at least one further secondary address loop no longer containing the previous fixed store addresses in such a manner that all data lying in time before the accident remain stored inerasably until the evaluation.

2. Method according to claim 1, characterised thereby, that the occupation of the storage spaces of the fixed store (22) by the recording of the data sequence is interrupted after a vehicle stop or when the vehicle is stationary and a counting operation is started for detection of the pure stopping time and that, on renewed movement of the vehicle, the new recording sequence starts with the entry of the counter state as start mark.

3. Method according to claim 1 or 2, characterised thereby, that the central system clock pulse determining the data movement and the counting operations is governed by a quartz time base.

4. Method according to one of the claims 1 to 3, characterised thereby, that an accident-related trigger event is ascertained through comparison of measured acceleration data (longitudinal and transverse acceleration) or calculated acceleration data (resultant of longitudinal and transverse acceleration, angular acceleration) and comparison with threshold values related in a given case to other vehicle status data (braking) as well as in a given case subject to inclusion of travel and speed data and, through storage offset (definition of a new start address increased by a complete offset for a given storage loop), all vehicle data are recorded further in another storage region (secondary address counting loop).

5. Method according to one of the claims 1 to 4, characterised thereby, that the offset for the start address increase on the appearance of a trigger event is referred either to a complete storage loop or to the stored data extent of an earlier recording sequence between two start marks, which begins with the entry of the counter state caused by a previous stop of the vehicle.

6. Method according to one of the claims 1 to 5, characterised thereby, that the time counting operation through counting-up, due to system clock pulse, of a storage place in the fixed store (22) starts up after each trigger event with or without subsequent vehicle stop and is performed until the storage cassette (31) inclusive of time base (21a), microprocessor circuit (21, 23), fixed store (22) and the acceleration sensors (26) is read out and the attained time counter state is set in relation with the absolute time of the evaluating station in such a manner that a gapless absolute time determination in relation to the occurrence of the trigger event takes place at the instant of the evaluation.

7. Method according to one or more of the claims 1 to 6, characterised thereby, that the respective actual zero frequencies at each vehicle start (start of the recording) are entered into the store for the automatic calibration of the acceleration sensors (26).

8. Accident data recorder for the performance of the method according to one or more of the claims 1 to 7, with transmitters scanning wheel rotations for determining traversed distance of travel and speed of travel, with acceleration sensors for the detection of longitudinal and transverse accelerations, in a given case with further sensors for the detection of other interesting operational states, with means for the analog-to-digital conversion of the detected data, with a central clock pulse generator for the data movement, furthermore with storage means for the short term intermediate storage and with a fixed store which after the occurrence of an accident (trigger event) serves for the inerasable storage of the detected data evaluatable subsequently, characterised thereby, that the fixed store (22) serves for the circulating storage of the detected data initially in a first storage loop with a given number of storage places, that oscillatory circuits with acceleration sensors (26) on capacitive base are provided for the detection of the acceleration data, wherein the frequencies delivered by these are feedable directly to the digital counting and subsequent storage in the fixed store (22), and that arithmetic means are provided, which subject to evaluation of detected or evaluated acceleration data and in a given case, of further vehicle data give the instant of an accident-related trigger event in such a manner that, subject to increase in the start address for the data storage by the complete offset of the (primary), in a given case reduced storage loop, a new (secondary) storage loop is defined for the subsequent data storage.

9. Accident data recorder according to claim 8, characterised thereby, that time counting means are provided, which are started on each vehicle stop and through the quartz-time-related system clock pulse change their storage content until vehicle movement is renewed, wherein the respectively attained counter state is stored as start mark with the new recording sequence.

10. Accident data recorder according to claim 8 or 9, characterised thereby, that peripheral additional operational states of the motor vehicle are defined as data to be stored with high resolution (status A data) and with normal resolution (status B data) and included in the data sequences.

11. Accident data recorder according to one of the claims 8 to 10, characterised thereby, that the fixed store (22) with the data management and organisation (control logic circuit 21 and ring addresser 23 or microprocessor 21/23) together with the acceleration sensors (26) are constructed separately into a basic device part in the form of a storage cassette (31), wherein the basic device displays a socket for the storage cassette (31) and contains the interfaces (24) for the transmission of the digital status data, buffer stores and current supply.

12. Accident data recorder according to one of the claims 8 to 11, characterised thereby, that the acceleration sensor (26) comprises at least one bending beam (tongues 11, 12, 13), which is clamped at one end and at its other end together with a stationary counterplate (11', 12', 13') forms a capacitor, as well as an associated oscillator, the oscillation frequency of which changes evaluatably in dependence on the change in capacitance at the capacitor in the case of an acceleration effect.

13. Accident data recorder according to claim 12, characterised thereby, that tongues (11, 12, 13) are provided, which are fastened at one end each time displaced through 90° at a common block-shaped clamping body (10) and lying opposite which are arranged the stationary counterplates, which overlap the tongues over a predetermined length, for the formation of capacitive sensors (F1, F2, F3).

14. Accident data recorder according to claim 12 or 13, characterised thereby, that the block-shaped clamping body (10) forms the electrical reference point and is arranged in a closed housing which stands under vacuum and is fastened on the storage cassette (31) or is part of the same, wherein transfer connection bodies (19) are fastened at the housing base plate (15) and the counterplates (11', 12', 13') of the respectively formed capacitors are fastened to be adjustable in their spacing from the tongues (11, 12, 13).

25 Weg-Sensor (Radumdreh.) Tachogener.

26 b-Sensor

29 Zündung

27 Status A

Bremslicht
Blinker links
Blinker rechts
Fernlicht
Hupe
ABS

Feststellbremse
Gurt links
Gurt rechts
Standlicht
Abblendlicht
Bremsbelag
Nebellicht
Nebelschlußleuchte

Status B

28

Interface

24

Zeit-basis 21a

Steuerlogik-schaltung 21

Ring-adressierer 23

Anzeige/Alarm 30

Festspeicher 22

31

Fig.1

# Fig. 2

# Fig. 3

# Fig. 4

F1 — 11 — IV — 10 — 13 — F3

11'  17  I  17  13'

12  17  II  17

F2  12'  III

14

15  16

# Fig. 5

Y₂  21

X₁  Z₂

Z₁  X₂

20

Y₁